# EUROPEAN PATENT SPECIFICATION

(11) **EP 1 205 107 B1**
(45) Date of publication and mention of the grant of the patent: **13.06.2007**
(21) Application number: 00310074.0
(22) Date of filing: 13.11.2000
(51) Int. Cl.: A01L 15/00

(54) **Equine hoof support system**
Pferdehufstützsystem
Système de support pour les sabots des équidés

(43) Date of publication of application: 15.05.2002
(73) Proprietor: Day, Peter Stuart, Sandy, Beds SG19 3AT (GB); Ashley, Phillip, Southminster, Essex CM10 7EW (GB); May, Stephen, Prof., Hatfield, Herts AL9 7TA (GB); Wilson, Alan, Dr., Royal Veterinary College, Hawkshead Lane North Mymms Hatfield Herts AL9 7TA (GB)
(72) Inventor: Day, Peter Stuart, Sandy, Beds SG19 3AT (GB); Ashley, Phillip, Southminster, Essex CM10 7EW (GB); May, Stephen, Prof., Hatfield, Herts AL9 7TA (GB); Wilson, Alan, Dr., Royal Veterinary College, Hawkshead Lane North Mymms Hatfield Herts AL9 7TA (GB)
(74) Representative: Pilkington, Stephanie Joan

(56) References cited:
- GB-A- 2 272 905
- US-A- 4 982 797
- US-A- 5 681 350
- US-A- 5 842 523

## Description

The present invention relates to equine hoof support.

To date the main treatment for the condition known as collapsed heels in the horse is by one or more of the following methods:
1. A broad shoe fitted long at the heels for support
2. A bar shoe which spreads load across the heel region
3. Use of a composite to provide direct mechanical support to the heels.

Although this may raise and/or support the heels of the foot it does not prevent the hoof wall in the heel region from bending as a result of mechanical load.

US 5,842,523 describes ambulation-protection means for equine hoofs including a plastic layer formed on the hoof and forming a customised shoe for the hoof.

US 5,681,350 describes an air- and liquid-permeable prosthesis for replacing and/or repairing a hoof. The prosthesis is formed on the hoof.

US 4,982,797 describes a method for securing a horseshoe to a hoof by wrapping a curable resin coated sheet material around an applied horseshoe.

GB 2 272 905 describes a liquid hoof sealant which seals the hoof by locking into the porous surface of the hoof wall.

Heel collapse is the result of bending of the horn tubules. The present treatments aim to remove mechanical loads from the heel region by distribution of load into an increased shoe bearing surface or by the unloading or reinforcement of the hoof wall by buttressing with a suitably rigid composite.

The present invention provides a device that is considered to increase the bending strength of the equine hoof wall by working in combination with it without greatly increasing the compressive stiffness along the axis of the horn tubules which is important for normal foot function.

The device operates by being strong in tension. This shifts the neutral axis of bending to the outer surface of the hoof wall and makes more of the hoof wall be loaded in compression.

A first aspect of the invention provides an equine hoof support device, wherein the device comprises a patch of composite material preformed to a hoof heel shape and is flexible and is strong in tension. The device is formed from a material comprising carbon fibre laid in epoxy resin. For example, the material may comprise carbon fibre in a bi-directional weave laid in epoxy resin. A suitable material may be 1mm thick.

A further aspect of the invention provides a kit of parts comprising a device according to any one of the preceding claims and a cyanoacrylate adhesive.

The invention is now described further by reference to the following, nonlimiting Figures and Examples.

Figure 1 shows a heel view of the device of the invention in position on a hoof. The device is shown by the shaded area.

Figure 2 shows a toe view of the device of the invention in position on a hoof. The device is shown by the shaded area.

Figure 3 shows a side view of the device of the invention in position on a hoof. The device is shown by the shaded area.

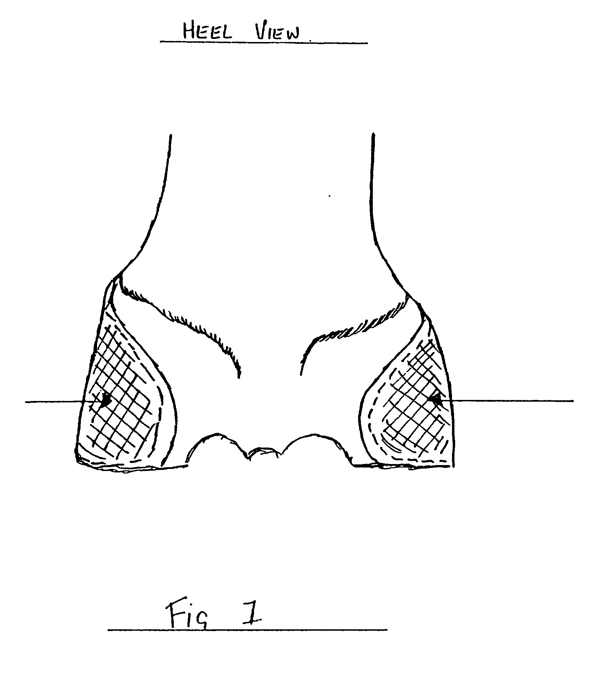

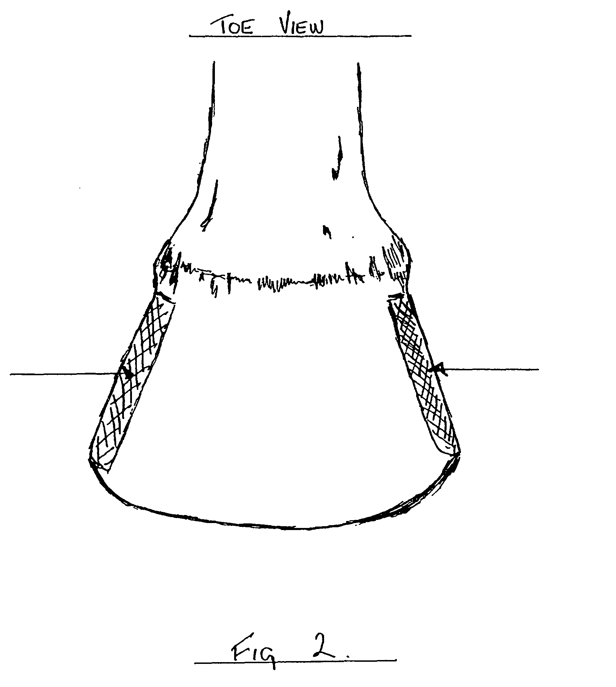

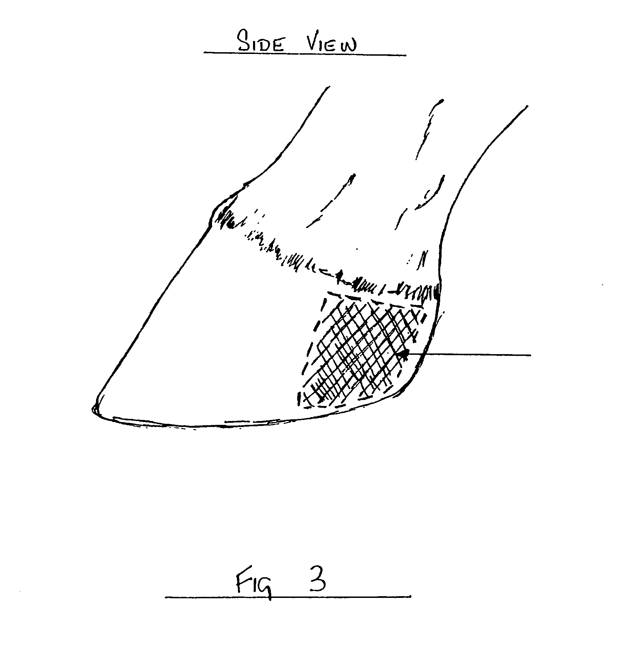

An example of this system is a 1 mm thick carbon fibre bi-directional weave (205g/m2) laid in epoxy resin, preformed to the heel shape and then hand tailored to the individual heel. The device is then bonded to the hoof wall using a cyanoacrylate adhesive. This device is very flexible on its own but when applied to the hoof wall has been shown to increase the bending strength of the hoof wall by approximately 40%. In Figures 1, 2 and 3 the device is shown by the shaded area.

## Claims

1. An equine hoof support device, wherein the device comprises a patch of composite material preformed to a hoof heel shape and is flexible and is strong in tension and is formed from a material comprising carbon fibre laid in epoxy resin.

2. The device of claim 1 wherein the carbon fibre forms a bi-directional weave.

3. The device of claim 2 wherein the material is 1 mm thick.

4. A kit of parts comprising a device according to any one of the preceding claims and a cyanoacrylate adhesive.

## Patentansprüche

1. Pferdehufstützvorrichtung, wobei die Vorrichtung ein Pflaster aus in Huftrachtengestalt vorgeformtem Verbundmaterial aufweist, das flexibel und zugfest ist und aus einem Material ausgebildet ist, das Kohlenstofffasern eingebettet in ein Epoxydharz aufweist.

2. Vorrichtung nach Anspruch 1, wobei die Kohlenstofffasern ein bidirektionales Gewebe ausbilden.

3. Vorrichtung nach Anspruch 2, wobei das Material 1 mm dick ist.

4. Teilesatz mit einer Vorrichtung gemäß einem der vorangehenden Ansprüche und einem Zyanakrylatklebstoff.

## Revendications

1. Dispositif de support pour sabot d'équidé, dans lequel le dispositif comprend une pièce en matériau composite préformée selon la forme du talon d'un sabot, est flexible et résistant en tension et est formé d'un matériau comprenant des fibres de carbone couchées dans une résine époxy.

2. Dispositif selon la revendication 1, dans lequel la fibre de carbone forme une armure bidirectionnelle.

3. Dispositif selon la revendication 2, dans lequel le matériau a une épaisseur de 1 mm.

4. Ensemble comprenant un dispositif selon l'une quelconque des revendications précédentes et une colle cyano-acrylate.
